# EUROPÄISCHE PATENTSCHRIFT

(11) **EP 1 359 452 B1**
(45) Veröffentlichungstag und Bekanntmachung des Hinweises auf die Patenterteilung: **03.05.2006**
(21) Anmeldenummer: 02009913.1
(22) Anmeldetag: 03.05.2002
(51) Int. Cl.: G02B 21/00

(54) **Konfokales Mikroskop mit zwei Mikrolinsenarrays und einem Lochblendenarray**
Confocal microscope having two micro-lens arrays and a pinhole array
Microscope confocale avec deux réseaux de micro-lentilles et un réseau de diaphragmes

(43) Veröffentlichungstag der Anmeldung: 05.11.2003
(73) Patentinhaber: Max-Planck-Gesellschaft zur Förderung der Wissenschaften e.V., 80539 München (DE)
(72) Erfinder: Hell, Stefan, 37073 Göttingen (DE); Pick, Rainer, 37075 Göttingen (DE)
(74) Vertreter: Rehberg Hüppe + Partner

(56) Entgegenhaltungen:
- DE-A- 19 627 568
- DE-A- 19 632 594
- US-A- 5 969 846
- PATENT ABSTRACTS OF JAPAN vol. 1997, no. 09, 30. September 1997 (1997-09-30) -& JP 09 133870 A (YOKOGAWA ELECTRIC CORP), 20. Mai 1997 (1997-05-20)

## Beschreibung

Die Erfindung bezieht sich auf ein konfokales Mikroskop mit den Merkmalen des Oberbegriffs des Anspruchs 1.

Unter anderem bezieht sich die Erfindung auf konfokale Fluoreszenzlichtmikroskope, bei denen das Probenlicht aufgrund des Zerfalls eines durch das Beleuchtungslicht angeregten Energiezustands von der Probe emittiert wird.

Weiterhin bezieht sich die Erfindung insbesondere auf solche konfokale Mikroskope der eingangs beschriebenen Art, bei denen eine Abrastereinrichtung vorgesehen ist, um das Mikrolinsenarray und das Lochblendenarray synchron parallel zu ihren Haupterstreckungsebenen zu bewegen, um die Probe in der Ebene abzurastern. Zusätzlich kann auch eine Abrasterung der Probe in der dazu senkrechten z-Richtung erfolgen, um die Probe letztlich dreidimensional zu erfassen. Dabei können alle weiteren Bauteile des Mikroskops neben dem Mikrolinsenarray und dem Lochblendenarray so ausgebildet sein, dass sie für alle Teilstrahlenbündel des Beleuchtungslichts und das aufgefangene Probenlicht gemeinsam vorgesehen sind, d. h. weder eine Trennung des Beleuchtungslichts in die einzelnen Teilstrahlenbündel noch eine entsprechende Trennung des Probenlichts vornehmen. So ist beispielsweise in der Regel ein gemeinsames Objektiv für alle Teilstrahlenbündel vorgesehen. Ebenso ist auch ein etwaiges Okular für alle Anteile des Probenlichts gemeinsam vorgesehen.

Bei einem konfokalen Mikroskop wird bekanntermaßen die Ortsauflösung der Messung der Probe in z-Richtung durch eine an äquivalenter Stelle zu dem gewünschten Messpunkt angeordnete Lochblende erhöht. Diese Erhöhung wird bei einem Mikroskop der eingangs beschriebenen Art in Bezug auf alle Messpunkte angewandt. Das heißt, die Lochblenden des Lochblendenarrays sind an den Messpunkten äquivalenten Stellen im Strahlengang des Probenlichts angeordnet.

Gleichzeitig wird die Lage der Messpunkte durch die Aufteilung des Strahlenbündels aus Beleuchtungslicht in die Teilstrahlenbündel durch das Mikrolinsenarray bestimmt, da jeder Messpunkt die Abbildung eines Fokus eines konvergierten Teilstrahlenbündels in die Probe ist. Insoweit muss das Mikrolinsenarray und seine Anordnung dem Lochblendenarray und seiner Anordnung entsprechen.

Ein konfokales Rasterfluoreszenzmikroskop mit einem Mikrolinsenarray zur Aufspaltung eines Strahlenbündels aus Beleuchtungslicht in eine Mehrzahl von konvergenten Teilstrahlenbündeln, um eine Probe in mehreren Messpunkten gleichzeitig zu Beleuchten, mit einem Strahlteiler zur Trennung der Strahlengänge des Beleuchtungslichts und von von der Beleuchtung der Probe stammendem, in Rückwärtsrichtung zu dem Beleuchtungslicht aufgefangenem Probenlicht und mit einem dem Mikrolinsenarray zur Aufspaltung des Beleuchtungslichts entsprechenden Lochblendenarray im Strahlengang des Probenlichts ist aus der US 5,717,519 A bekannt. Hier ist das Mikrolinsenarray als Mikrolinsenrad ausgebildet, das parallel zu einer sog. Nipkow-Scheibe, welche das Lochblendenarray ausbildet, angeordnet ist. Die Mikrolinsenrad und die Nipkow-Scheibe sind um eine gemeinsame, sich senkrecht zu ihren jeweiligen Haupterstreckungsebenen verlaufende Drehachse drehantreibbar gelagert, wodurch eine Abrastereinrichtung für die Probe realisiert ist. Bei einer Nipkow-Scheibe handelt es sich um eine Drehscheibe mit einer spiralförmigen Anordnung von Lochblenden um die Drehachse. Das Strahlenbündel aus Beleuchtungslicht tritt bei dem bekannten konfokalen Mikroskop zunächst durch die Mikrolinsen des Mikrolinsenrads hindurch. Hierdurch wird das Beleuchtungslicht in eine Mehrzahl von konvergenten Teilstrahlenbündeln aufgespalten. Dabei liegt der Fokus jedes Teilstrahlenbündels im Bereich der Durchgangsöffnung einer Lochblende der Nipkow Scheibe. Zwischen dem Mikrolinsenrad und der Nipkow-Scheibe ist der Strahlteiler angeordnet, der hier das durch die Nipkow-Scheibe von der Probe aus hindurchtretende Probenlicht vor dem Mikrolinsenrad seitlich zu einem Detektor umlenkt. Bei dem Strahlteiler handelt es sich konkret um einen dichroitischen Spiegel, der auch zu einer ungewollten Auslenkung der von dem Mikrolinsenrad kommenden konvergenten Teilstrahlenbündel führt. Um diese Umlenkung zu kompensieren, sind das Mikrolinsenrad und die Nipkow-Scheibe bei dem bekannten konfokalen Mikroskop um einen kleinen Winkel zu der Strahlachse des einfallenden Strahlbündels des von einem Laser kommenden Beleuchtungslichts verkippt Das Probenlicht gelangt bei dem bekannten konfokalen Mikroskop nicht durch die Mikrolinsen des Mikrolinsenrads, sondem wird vorher von dem dichroitischen Spiegel seitlich zu dem Detektor umgelenkt. Nachteilig bei dem bekannten konfokalen Mikroskop ist der hohe Justieraufwand für das Mikrolinsenrad relativ zu der Nipkow-Scheibe. Wenn im Wesentlichen das gesamte von dem Laser kommende Beleuchtungslicht zur Beleuchtung der Probe in den Messpunkten genutzt werden soll, muss die Nipkow-Scheibe exakt so ausgerichtet werden, dass jeder Fokus jedes von dem Mikrolinsenrad kommenden konvergenten Teilstrahlenbündels genau in den Durchgangsbereich einer Lochblende der Nipkow-Scheibe fällt. Dies bedeutet hohe Anforderungen sowohl an die Parallelität des Mikrolinsenrads zu der Nipkow-Scheibe als auch an ihren Abstand als auch an ihre Drehausrichtung um die gemeinsame Drehachse. Zudem muss natürlich auch die Lage dieser Drehachse im Raum exakt eingestellt werden, um die gewünschte Kompensation der Auslenkung der Teilstrahlenbündel durch den dichroitischen Spiegel zu realisieren. Bei all dem muss berücksichtigt werden, dass sich zwischen dem Mikrolinsenrad und der Nipkow-Scheibe der Strahlteiler befindet und dass der Strahlengang des Probenlichts in tangentialer Richtung von der gemeinsamen Drehachse des Mikrolinsenrads und der Nipkow-Scheibe auch vorübergehend nicht unterbrochen werden sollte.

Aus der WO 98/28775 A ist ein Rasterfluoreszenzmikroskop bekannt, bei dem zur Vermeidung des Justageaufwands eines Lochblendenarrays relativ zu einem Mikrolinsenarray das Lochblendenarray weggelassen wird. Die Ortsauflösung des bekannten Mikroskops in z-Richtung wird dabei durch Simulation eines Lochblendenarrays im Bereich des Detektors durch Software oder durch eine Zweiphotonenanregung der Probe in den Messpunkten realisiert. Durch eine Simulation eines Lochblendenarrays im Bereich des Detektors kann der die Ortsauflösung erhöhende Wirkung eines echten Lochblendenarrays, d.h. die Ortsauflösung in z-Achse einer echten konfokalen Anordnung aber nicht erreicht werden, und bei der Zweiphotonenanregung der Probe ist die Ausbeute an Probenlicht relativ gering.

Ein konfokales Mikroskop mit den Merkmalen des Oberbegriffs des Anspruchs 1 ist aus der JP-A-09133870 bekannt. Hier ist das Lochblendenarray zwischen den beiden Mikrolinsenarrays angeordnet, und das Beleuchtungslicht wird von dem es aufspaltenden Mikrolinsenarray durch den Strahlteiler hindurch auf das Lochblendenarray fokussiert und gelangt anschließend durch das weitere Mikrolinsenarray, während das zurücklaufende Probenlicht von dem weiteren Mikrolinsenarray auf das Lochblendenarray fokussiert wird und anschließend mit dem Strahlteiler seitlich aus dem Strahlengang des Beleuchtungslichts heraus gelenkt wird. Das Probenlicht tritt so nicht durch das Mikrolinsenarray zur Aufspaltung des Beleuchtungslichts hindurch.

Der Erfindung liegt daher die Aufgabe zugrunde, ein konfokales Mikroskop mit den Merkmalen des Oberbegriffs des Anspruchs 1 aufzuzeigen, bei dem der faktische Justageaufwand reduziert ist.

Damit soll letztlich ein Weg aufgezeigt werden, konfokale Mikroskope der eingangs beschriebenen Art kostengünstiger auszubilden.

Erfindungsgemäß wird diese Aufgabe durch ein konfokales Rastermikroskop mit den Merkmalen des Patentanspruchs 1 gelöst.

Vorteilhafte Ausführungsformen des neuen konfokalen Mikroskops sind in den Unteransprüchen 2-15 beschrieben.

Bei dem neuen Mikroskop ist das Mikrolinsenarray zur Aufspaltung des Beleuchtungslichts auch im Strahlengang des Probenlichts angeordnet Um die Auswirkungen des Mikrolinsenarrays auf das Probenlicht zu kompensieren, ist ein zweites entsprechendes Mikrolinsenarray vorgesehen. Bei dem neuen konfokalen Mikroskop durchläuft das Probenlicht also zwei Mikrolinsenarrays. Dies bedeutet, dass die Mikrolinsen des Mikrolinsenarrays sehr gute optische Eigenschaften aufweisen müssen, damit die Messpunkte in der Probe fehlerfrei aus dem Probenlicht abgebildet werden. Mikrolinsenarrays mit hierzu hinreichenden optischen Eigenschaften sind aber durchaus verfügbar. Durch ihren Einsatz wird es möglich, den Strahlteiler zur Trennung der Strahlengänge des Beleuchtungslichts und des in Rückwärtsrichtung zu dem Beleuchtungslicht aufgefangenen Probenlichts zwischen den Mikrolinsenarrays anzuordnen. Dieser Bereich ist insbesondere dann, wenn das Strahlenbündel des Beleuchtungslichts ein paralleles Strahlenbündel ist, viel unkritischer als der Bereich zwischen dem Mikrolinsenarray und dem Lochblendenarray, welcher im Stand der Technik zur Anordnung des Strahlteilers genutzt wird. Konkret ist der Abstand der beiden Mikrolinsenarrays unkritisch. Soweit das Strahlenbündel des Beleuchtungslichts ein paralleles Strahlenbündel ist, ist der Abstand theoretisch sogar beliebig, weil dann auch das in Rückwärtsrichtung zu dem Beleuchtungslicht laufende Probenlicht von dem das Beleuchtungslicht aufspaltenden Mikrolinsenarrays zu parallelen Teilstrahlenbündeln geformt wird. Dies ergibt sich allein daraus, dass der optische Weg des Beleuchtungslichts und des Probenlichts bis auf seine Richtung von der Probe aus gesehen bis hinter das erste Mikrolinsenarray der gleiche ist. Auch gegenüber anderen Justageungenauigkeiten ist die Anordnung der beiden Mikrolinsenarrays bei dem neuen konfokalen Mikroskop relativ unempfindlich. Es muss zwar noch zusätzlich das Lochblendenarray relativ zu den Mikrolinsenarrays justiert werden, doch muss dabei keine Rücksicht auf einen dazwischen angeordneten Strahlteiler genommen werden.

Insbesondere bei dem weiteren Mikrolinsenarray ist es bevorzugt, wenn alle Mikrolinsen gleiche Brennweiten aufweisen. Bei dem zur Aufspaltung des Beleuchtungslichts verwendeten ersten Mikrolinsenarray ist dies nicht unbedingt erforderlich. Mit Mikrolinsen unterschiedlicher Brennweite kann dabei sogar die Probe in z-Richtung abgetastet werden. Durch die gleichen Brennweiten des weiteren Mikrolinsenarrays erfolgt die Abbildung dieser Messpunkte dennoch in eine Ebene.

Weiterhin ist es bevorzugt, wenn die beiden Mikrolinsenarrays parallel zueinander ausgerichtet sind, wobei der Strahlteiler das Strahlenbündel des Beleuchtungslichts aus dem Strahlengang des Probenlichts auslenkt. Während im Stand der Technik das Beleuchtungslicht im Wesentlichen geradlinig durch die Anordnung des Lochblendenarrays und des Mikrolinsenarrays über den Strahlteiler hinweg hindurchlief, läuft bei dem neuen konfokalen Mikroskop vorzugsweise das Probenlicht ohne Umlenkung durch den Strahlteiler hindurch.

Das Lochblendenarray kann bei dem neuen konfokalen Mikroskop von der Probe aus gesehen sowohl vor dem Mikrolinsenarray zur Aufspaltung des Beleuchtungslichts angeordnet sein als auch hinter dem weiteren Mikrolinsenarray. In jedem Fall ist das Lochblendenarray auf einer dem Strahlteiler abgekehrten Seite eines der Mikrolinsenarrays angeordnet. Das Lochblendenarray kann daher über seine gesamte Fläche mit dem jeweiligen Mikrolinsenarray körperlich verbunden sein. Bevorzugt ist dabei eine konkrete Ausführungsform, bei der das Mikrolinsenarray und das Lochblenden an zwei einander gegenüberliegenden Oberflächen eines Körpers aus fichtbrechendem Material ausgebildet sind. Auf diese Weise ist eine nachträgliche Justierung des Lochblendenarrays zu dem jeweiligen Mikrolinsenarray nicht mehr erforderlich. Vielmehr ist die Relativlage des Lochblendenarrays zu dem Mikrolinsenarray durch den gemeinsamen Körper aus lichtbrechendem Material festgelegt.

In der bevorzugten Ausführungsform des neuen konfokalen Mikroskops ist eine Abrastereinrichtung vorgesehen, die die beiden Mikrolinsenarrays und das Lochblendenarray synchron parallel zu ihren Haupterstreckungsebenen bewegt. Dabei sind die beiden Mikrolinsenarrays und das Lochblendenarray insbesondere als rotierende Scheiben, d.h. als Räder, vorgesehen.

Um die effektive Größe der Blendeöffnung der Lochblenden des Lochblendenarrays zu variieren, kann ein weiteres, dem ersten Lochblendenarray entsprechendes Lochblendenarray vorgesehen sein, das direkt vor oder hinter dem ersten Lochblendenarray angeordnet ist und das parallel zu dem ersten Lochblendenarray verschieblich ist. Die maximale Größe der gemeinsamen Durchtrittsquerschnitte beider Lochblendenarrays ist dann gegeben, wenn die Lochblendenarrays deckungsgleich sind. Mit zunehmender relativer Verschiebung sinkt die Größe der gemeinsamen Durchtrittsquerschnitte, wodurch die effektive Blendenöffnung der Lochblenden des Lochblendenarrays sinkt. Beispielsweise kann die Blendenöffnung maximiert werden, wenn das neue konfokale Mikroskop für eine Zweiphotonenanregung der Probe genutzt wird, bei der sich die Ortsauflösung in z-Richtung bereits aus anderen Gründen einstellt. Umgekehrt können die Blendenöffnungen minimiert werden, wenn die Ortsauflösung in z-Richtung im Einzelfall besonders hoch sein soll.

Bezüglich der Lochblenden jedes Mikrolinsenarrays ist es bevorzugt, wenn diese quadratisch sind, wobei die Lochblenden aus einer vollen Überdeckung in Richtung einer Quadratdiagonalen relativ zueinander verschieblich sind. Die gemeinsamen Durchtrittsquerschnitte sind dann immer quadratisch bei abnehmender Größe der Quadrate. Solange die Blendenöffnung dabei insgesamt kleiner als der Fokusquerschnitt des auf die Blendenöffnung fokussierten Teilstrahlenbündels ist, ist die Form der Begrenzung des Duchtrittsquerschnitts unkritisch.

Der Justageaufwand bei dem neuen konfokalen Mikroskop wird weiterhin dadurch reduziert, dass als Strahlteiler ein solcher Strahlteiler eingesetzt wird, der das Probenlicht versatzfrei durchtreten lässt oder der versatzkompensiert ist. Dabei müssen diese Eigenschaften des Strahlteilers nur für ganz oder im Wesentlichen parallele Teilstrahlenbündel gegeben sein, in denen das Probenlicht zwischen den beiden Mikrolinsenarrays vorliegt. So kann der Strahlteiler beispielsweise ein Strahlteilerwürfel sein, dessen zusätzliche Würfelgrenzflächen neben der strahlteilenden Diagonalfläche bei einem konfokalen Mikroskop nach dem Stand der Technik durchaus kritisch wären. Eine Versatzkompensation für einen halbdurchlässigen Spiegel ist beispielsweise durch eine zusätzliche, unter einem 90°-Winkel zu dem halbdurchlässigen Spiegel angeordnete optische Platte mit planparallelen Oberflächen und abgestimmter Dicke realisierbar. Angesichts der parallelen Teilstrahlen des Probenlichts im Bereich des Strahlteilers sind auch hier die verschiedenen Oberflächen der optischen Anordnung zwischen den beiden Mikrolinsenarrays unkritisch.

Die Erfindung wird im Folgenden anhand von verschiedenen Ausführungsbeispielen näher erläutert und beschrieben. Dabei zeigt:
- Fig. 1: eine stark vereinfachte Übersicht über die Bauteile einer ersten Ausführungsform des konfokalen Mikroskops,
- Fig. 2: eine konkretisierte Ausgestaltung des Mikroskops gemäß Fig. 1 als Fluoreszenzlichtmikroskop,
- Fig. 3: die Draufsicht auf ein Mikrolinsenrad des Mikroskops gemäß Fig. 2,
- Fig.4: verschiedene Möglichkeiten der z-Abrasterung einer Probe mit dem Mikroskop gemäß Fig. 2,
- Fig. 5: eine konkretisierte Ausgestaltung des Mikroskops gemäß Fig. 1 als Reflektionslichtmikroskop,
- Fig. 6: eine Abwandlung des Mikroskops gemäß Fig. 2,
- Fig. 7: ein Schaubild zur Realisierung eines Lochblendenarrays mit verstellbarer Blendenöffnung,
- Fig. 8: eine zweite grundsätzliche Ausführungsform des konfokalen Mikroskops und
- Fig. 9: ein Detail einer alternativen Ausführungsform zu dem Mikroskop gemäß Fig. 8,

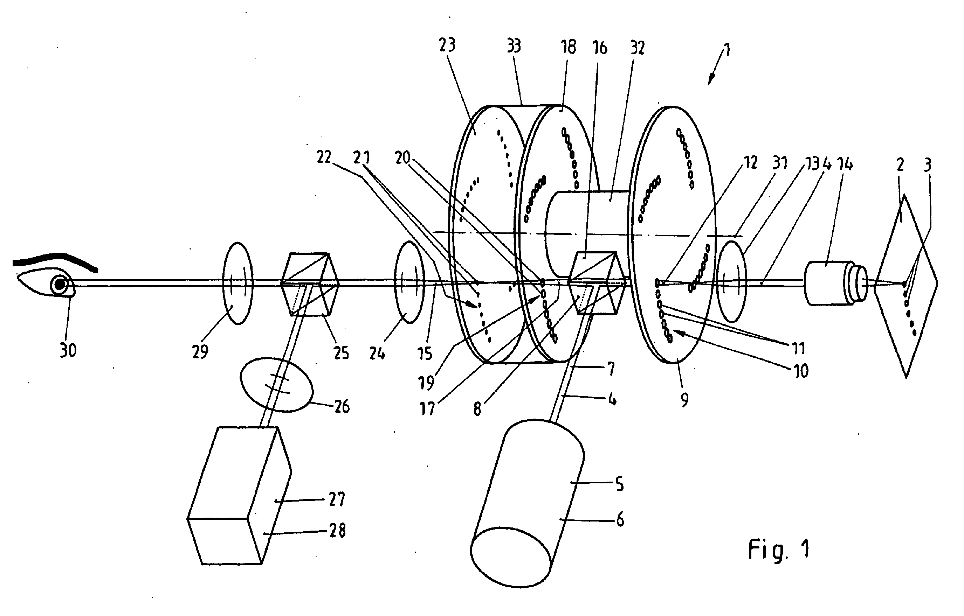

Fig. 1 zeigt den grundsätzlichen Aufbau eines konfokalen Mikroskops 1 zum gleichzeitigen Messen einer Probe 2 in mehreren Messpunkten 3. In jedem der Messpunkte wird die Probe 2 durch Beleuchtungslicht 4 beleuchtet. Das Beleuchtungslicht 4 kommt von einer Lichtquelle 5, bei der es sich typischerweise um einen Laser 6 handelt. Das von dem Laser 6 kommende Beleuchtungslicht ist ein paralleles Strahlenbündel 7. Das parallele Strahlenbündel 7 wird von einem Strahlteiler 8 auf ein Mikrolinsenrad 9 umgelenkt. Das Mikrolinsenrad 9 weist ein Mikrolinsenarray 10 aus einer Mehrzahl von nebeneinander angeordneten Mikrolinsen 11 auf. Das Mikrolinsenarray 10 spaltet das Strahlenbündel 7 in eine Mehrzahl von konvergenten Teilstrahlenbündeln 12 auf, von denen hier nur eines dargestellt ist. Über eine Tubuslinse 13 und ein Mikroskopobjektiv 14 wird jedes Teilstrahlenbündel 12 in einen der Messpunkte 3 fokussiert. Die Tubuslinse 13 und das Mikroskopobjektiv 14 sind dabei für alle Teilstrahlenbündel 12 gemeinsam vorgesehen. In den Messpunkten 3 wird die Probe 2 zur Emission von Probenlicht angeregt, wenn das Mikroskop 1 ein Fluoreszenzmikroskop ist, oder die Probe reflektiert oder streut das Beleuchtungslicht in den Messpunkten 3. In jedem Fall gelangt das Probenlicht 15 auf demselben Weg wie das Beleuchtungslicht 4, aber in umgekehrter Richtung, durch das Mikroskopobjektiv 14, die Tubuslinse 13 und die Mikrolinsen 11 des Mikrolinsenrads 9 bis zu dem Strahlteiler 8. Der hier als Strahlteilerwürfel 16 ausgebildete. Strahlteiler 8 lässt das Probenlicht hindurchtreten und trennt das Probenlicht 15 so von dem Beleuchtungslicht 4. Im Bereich des Strahlteilers 8 besteht das Probenlicht 4 aus parallelen Teilstrahlenbündeln 17, die auf ein zweites Mikrolinsenrad 18 treffen. Das zweite Mikrolinsenrad 18 weist ein Mikrolinsenarray 19 aus Mikrolinsen 20 auf, die äquivalent zu den Mikrolinsen 11 des Mikrolinsenrads 9 angeordnet sind. Die Mikrolinsen 20 fokussieren die Teilstrahlenbündel 17 auf Lochblenden 21 eines Lochblendenarrays 22 auf einem Lochblendenrad 23. Jedes Teilstrahlenbündel 17 wird genau in die Blendenöffnung einer Lochblende 21 fokussiert. Die Lochblende 21 ist dabei konfokal zu dem jeweiligen Messpunkt 3 angeordnet, aus dem das Probenlicht 15 stammt. Von der Lochblende 21 aus gelangt das Probenlicht 15 durch eine Linse 24, über einen Strahlenteiler 25 und durch eine weitere Linse 26 zu einem Detektor 27, bei dem es sich um eine Kamera 28 handeln kann, oder durch die Linse 24, den Strahlteiler 25 und ein Okular 29 direkt in das Auge 30 einer Person, die die Probe 2 durch das Mikroskop 1 betrachtet. Dabei entsteht bei einem synchronen Verdrehen der Mikrolinsenräder 9 und 18 und des Lochblendenrads 23 um eine gemeinsame Drehachse 31, in dessen Folge die Probe 2 mit den Messpunkten 3 abgerastert wird, ein zumindest flächiges Bild der Probe 2. Um die relative Ausrichtung der Mikrolinsenräder 9 und 18 zu realisieren, können diese nur im Bereich der Drehachse 31 eine Verbindung 32 zueinander aufweisen, da zwischen den Mikrolinsenrädem 9 und 18 der Strahlteiler 8 angeordnet ist. Das Mikrolinsenrad 18 kann hingegen mit dem Lochblendenrad 23 auch im Bereich seines Umfangs eine Verbindung 33 aufweisen. Es ist also eine besonders stabile Baugruppe aus dem Mikrolinsenrad 18 und dem Lochblendenrad 23 vorsehbar.

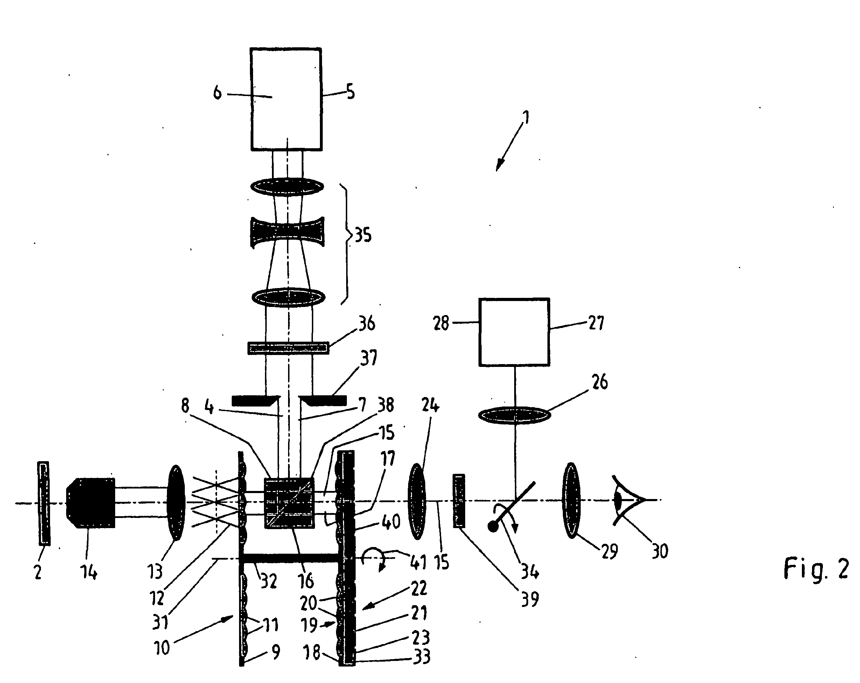

Die etwas konkretisiertere Darstellung des Mikroskops 1 gemäß Fig. 2 betrifft die Ausbildung des Mikroskops 1 als Fluoreszenzlichtmikroskop und umfasst verschiedene zusätzliche optische Elemente. Als Abweichung gegenüber Fig. 1 ist statt des Strahlteilers 25 ein in den Strahlengang des Probenlichts 15 schwenkbarer Spiegel 34 vorgesehen, der entweder das Probenlicht 15 zu dem Auge 30 durchlässt oder das Probenlicht 15 zu dem Detektor 27 umlenkt. An zusätzlichen Details umfasst Fig. 2 ein Teleskop 35 zur Aufweitung des von dem Laser 6 kommenden Beleuchtungslichts 4. Das aufgeweitete Beleuchtungslicht 4 tritt durch einen Farbfilter 36 hindurch, und anschließend wird mit einer Blende 37 der Randbereich des Beleuchtungslichts 4 abgeschnitten. Der Kembereich bildet das parallele Strahlenbündel 7 aus, das auf den Strahlteiler 8 fällt. Der Strahlteiler 8 ist hier ein dichroitischer Strahlteilerwürfel 38, der Licht mit der Wellenlänge des Beleuchtungslichts 4 umlenkt und Licht mit der Wellenlänge des Probenlichts 15 hindurchtreten lässt. Im Strahlengang des Probenlichts 15 ist entsprechend ein Farbfilter 39 angeordnet. Als wichtiges Detail zeigt Fig. 2 weiterhin, dass das Mikrolinsenrad 18 und das Lochblendenrad 23 zu einer in der Richtung des Strahlengangs des Probenlichts 15 durchgehenden Einheit zusammengefasst sind. Konkret ist ein Körper 40 aus lichtbrechendem Material vorgesehen, an dessen einer Oberfläche die Mikrolinsen 20 ausgebildet sind und an dessen gegenüberliegender Oberfläche die Lochblenden 21 ausgebildet sind. Hiermit ist eine feste räumliche Anordnung der Lochblenden 21 zu den Mikrolinsen 20 gegeben, bei der sich die Lochblenden 21 genau am Brennpunkt der Mikrolinsen 20 befinden. Die Justierung der verdrehbaren Räder 9, 18 und 23 relativ zu den ortsfesten Bestandteilen des Mikroskops 1 beschränkt sich damit auf die Ausrichtung von zwei Bauteilen. Dabei ist vor Allem der Abstand der beiden Mikrolinsenräder 9 und 18 unkritisch, weil das Beleuchtungslicht 15 hier in Form von parallelen Teilstrahlenbündeln 17 vorliegt.

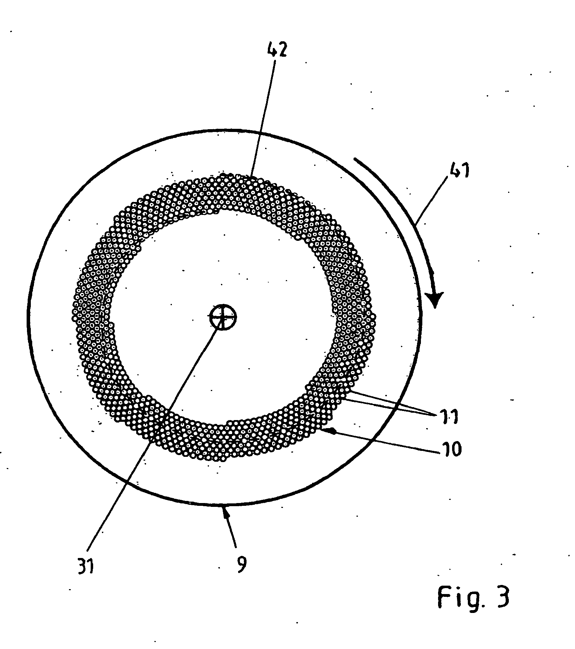

Fig. 3 zeigt eine Ansicht von vorne auf das Mikrolinsenrad 9. Dabei ist das Mikrolinsenarray 10 und die dortige Anordnung der Mikrolinsen 11 gut zu erkennen. Weiterhin ist durch einen Pfeil 41 eine Drehrichtung des Mikrolinsenrads 9 angedeutet. Die einzelnen Mikrolinsen 11 sind auf spiralförmigen Bahnen angeordnet, von denen eine durch eine gestrichelte Linie 42 hervorgehoben ist. Im Bereich des Mikrolinsenarrays 10 wird die Probe 2 durch die Verdrehung des Mikrolinsenrads 9 vollständig zweidimensional abgetastet.

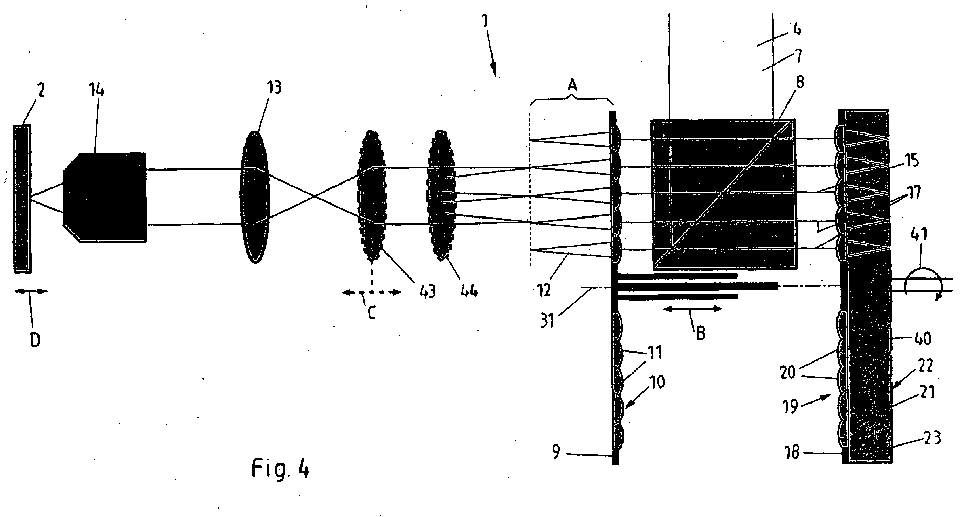

Fig. 4 skizziert verschiedene Möglichkeiten, die Probe 2 zusätzlich in z-Richtung, d. h. in Richtung des Strahlengangs des Mikroskops 1 abzurastem. Zu diesem Zweck können die Brennweiten A der Mikrolinsen 11 des Mikrolinsenrads 9 unterschiedlich lang sein. Das Mikrolinsenrad 9 kann auch als Ganzes in Richtung eines Doppelpfeils B in Richtung seiner Drehachse 31 verschoben werden, um die Abrasterung in z-Richtung der Probe 2 zu bewirken. Weitere Möglichkeiten sind die Verschiebung einer Linse 43 eines Paars von Linsen 43 und 44 in Richtung eines Doppelpfeils C. Natürlich kann auch die Probe 2 in Richtung eines entsprechenden Doppelpfeils D in z-Richtung verschoben werden. Fig. 4 lässt überdies die Anordnung der Lochblenden 21 an den Brennpunkten der Mikrolinsen 20 des Mikrolinsenrads 18 deutlich werden. An diesen Brennpunkten werden die parallelen Teilstrahlenbündel 17 des Probenlichts 15 von den Mikrolinsen 20 fokussiert. Gleichzeitig sind die Lochblenden 21 konfokal zu den Messpunkten auf der Probe 2 angeordnet.

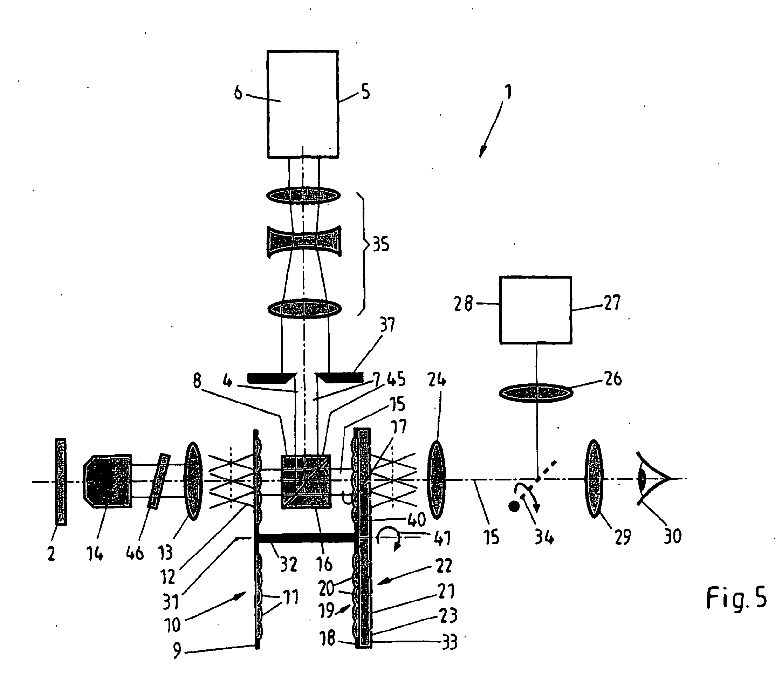

Das Mikroskop 1 gemäß Fig. 5 ist als Reflektions- oder Streulichtmikroskop ausgebildet, bei dem das Probenlicht 15 von den Messpunkten 3 der Probe 2 reflektiertes Beleuchtungslicht 4 ist, so dass das Probenlicht dieselbe oder zumindest fast dieselbe Wellenlänge aufweist wie das Beleuchtungslicht. Entsprechend sind hier andere Mittel zur Trennung des Probenlichts 15 und des Beleuchtungslichts 4 vorgesehen sein als bei dem Fig. 2 dargestellten Mikroskop 1. Der Strahlteiler 8 ist hier ein Polarisationsstrahlteilerwürfel 45, der Beleuchtungslicht 4, das in einer bestimmten Richtung linear polarisiert ist, auf die Probe 2 hin umlenkt. Eine zwischen der Tubuslinse 13 und dem Mikroskopobjektiv 14 angeordnete Lambdaviertelplatte 46 ändert die Polarisation des Beleuchtungslichts 4 in eine zirkulare Polarisierung bestimmter Drehrichtung. Durch die Reflektion des Beleuchtungslichts 4 in den Messpunkten 3 weist das von der Probe 2 zurückkommende Probenlicht 15 eine um 180° geänderte Phase, d.h. eine zirkulare Polarisierung mit zu dem Beleuchtungslicht 4 gegenläufiger Drehrichtung auf, die durch die Lambdaviertelplatte 46 in eine lineare Polarisierung mit zu dem Beleuchtungslicht 4 vor der Lambdaviertelplatte um 90° verdrehter Richtung geändert wird. So tritt das Probenlicht 15 ungehindert durch den Polarisationsstrahlteilerwürfel 45 hindurch. Die Farbfilter 36 und 37 sind bei der Ausführungsform des Mikroskops 1 gemäß Fig. 5 nicht vorhanden. Auch die Polarisationselemente 45 und 46 sind für die Funktion des Reflektionsmikroskops gemäß Fig. 5 nicht zwingend, verbessern aber den erzielbaren Helligkeitskontrast.

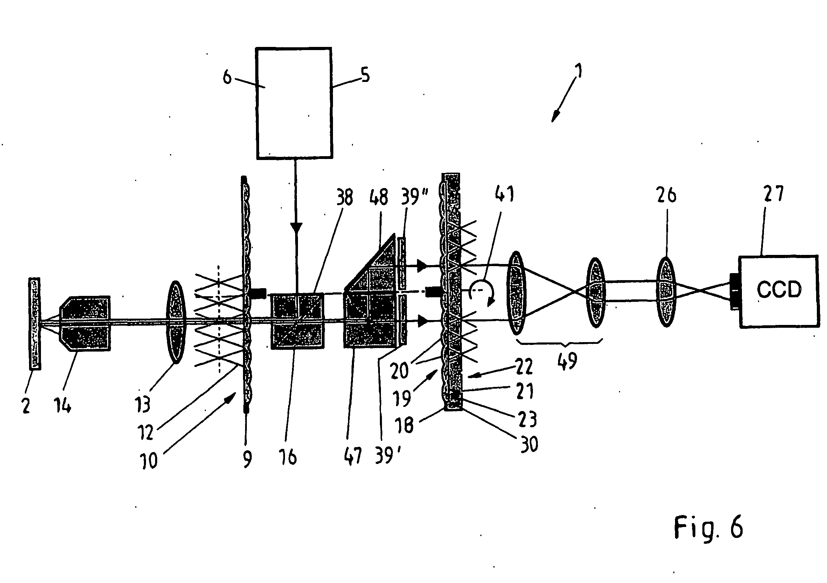

Fig. 6 zeigt ein Mikroskop 1, das wieder als Fluoreszenzmikroskop ausgebildet ist und auf einem dichroitischen Strahlteilerwürfel 38 aufbaut. Hier sind aber zusätzlich zwischen dem Mikrolinsenrad 9 und dem Mikrolinsenrad 18 noch ein weiterer Strahlteilerwürfel 47 und ein Umlenkprisma 48 vorgesehen. Auch hierbei handelt es sich um dichroitische Bauteile, denen zwei Farbfilter 39' und 39" nachgeschaltet sind. Auf diese Weise kann Probenlicht unterschiedlicher Wellenlänge, das von der Probe 2 kommt, zwischen den beiden Mikrolinsenrädem 9 und 18 getrennt werden und über unterschiedliche Bereiche des Mikrolinsenarrays 19 und des Lochblendenarrays 22 auf den Detektor 27 abgebildet werden. Dabei ist noch ein Teleskop 49 zwischengeschaltet, um die aufgespaltenen Farben des Probenlichts soweit zusammenzuführen, dass sie nebeneinander auf dem Detektor 27 abbildbar sind. Der Detektor 27 weist damit ein Bild mit zwei oder mehr Bereichen auf, die unterschiedlichen Farben des Probenlichts entsprechen.

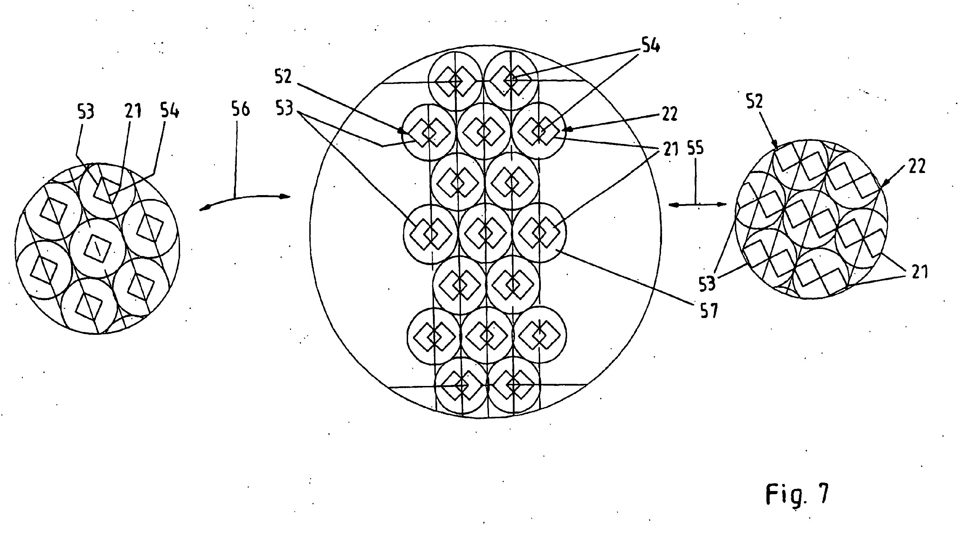

Fig. 7 ist eine Darstellung zu der Möglichkeit, den effektiven freien Durchtrittsquerschnitt des Lochblendenarrays 22 und damit die Blendenöffnung der konfokalen Lochblenden zu variieren. Zu diesem Zweck ist ein weiteres Lochblendenarray 52 aus Lochblenden 53 vorgesehen, wobei die Anordnungen der Lochblenden 21 und 53 der Lochblendenarrays 22 und 52 in der Fläche gleich sind, aber relativ zueinander verschoben werden können. Der freie Durchtrittsquerschnitt 54 ergibt sich dabei durch die Überlappung der Blendenöffnungen jeweils einer Lochblende 21 und einer Lochblende 53. Konkret sind die Blendenöffnungen der Lochblenden 21 und 53 hier jeweils quadratisch begrenzt und es ist ihre relative Verschiebung in Richtung einer Quadratdiagonalen vorgesehen. In der Mitte von Fig. 7 ist die Relativanordnung der Lochblendenarrays 22 und 52 dargestellt, die zu freien Durchtrittsquerschnitten 54 mittlerer Größe führt. Beim Verschieben des Lochblendenarrays 22 in Richtung des Pfeils 55, die bei Anordnung beider Lochblendenarrays 22 und 52 auf Lochblendenrädem tatsächlich einer Relativverdrehung der beiden Lochblendenräder entspricht, geht die Überschneidung der Lochblenden 21 und 53 letztlich ganz verloren, was rechts in Fig. 7 dargestellt ist. Hier gibt es keinen freien Durchtrittsquerschnitt 54 mehr. Bei Verschiebung in umgekehrter Richtung eines Pfeils 56 vergrößern sich die freien Durchtrittsquerschnitte 54, bis die Lochblenden 21 und 53 gerade genau deckungsgleich sind, was links in Fig. 7 dargestellt ist. Der freie Durchtrittsquerschnitt 54 ist in jedem Falle kleiner als der jeweils auf die Lochblenden 21 und 53 abgebildete Fokusbereich 57, so dass die Form des Begrenzung des freien Durchtrittsquerschnitts 54 durch ein Quadrat unkritisch ist. Vielmehr wirkt sich bei der Form der Lochblenden 21 und 53 gemäß Fig. 7 günstig aus, dass auch bei ihrer Relativvrschiebung der freie Durchtrittsquerschnitt 54 immer quadratisch begrenzt ist und sich nur in seiner Größe ändert.

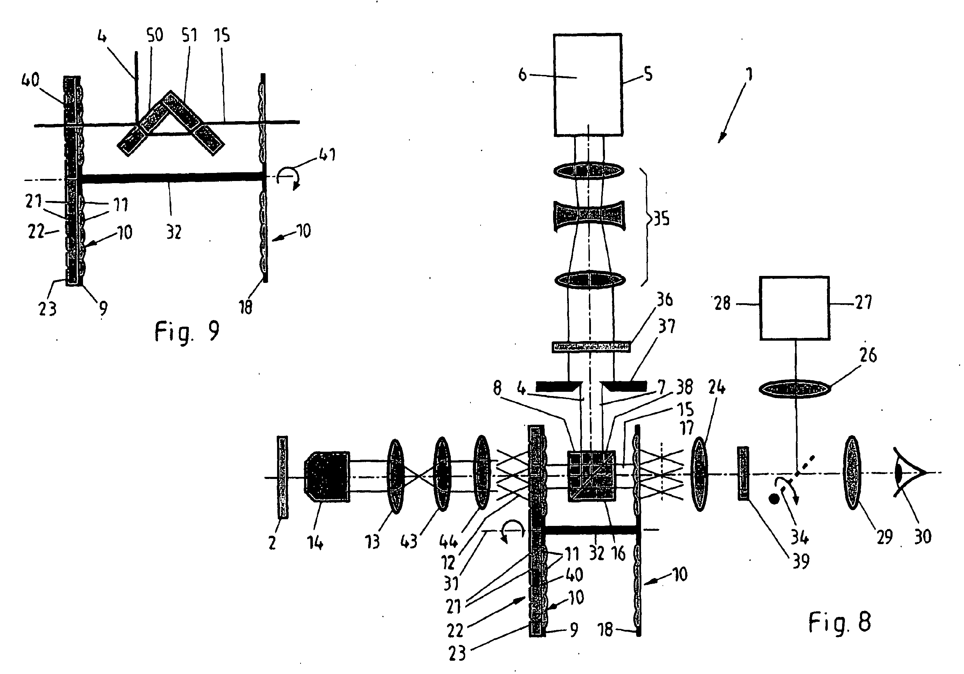

Fig. 8 zeigt eine Abwandlung der Ausführung des Mikroskops 1 gemäß Fig. 2, wobei hier das Lochblendenarray 22 auf dem Lochblendenrad 23 vor dem Mikrolinsenarray 9, statt hinter dem Mikrolinsenarray 18 angeordnet ist. Auf diese Weise tritt auch das Beleuchtungslicht 4 durch die Lochblenden 21 hindurch. Weiterhin ist das Lochblendenarray 22 relativ weiter von dem Detektor 27 bzw. dem Auge 30 entfernt. Prinzipielle Unterschiede in der Funktion des Mikroskops 1 ergeben sich hierdurch jedoch nicht. Auch bei dieser Ausführungsform kann ein Körper 40 vorgesehen sein, an dessen einer Oberfläche dann die Mikrolinsen 11 des Mikrolinsenarrays 10 des Mikrolinsenrads 9 ausgebildet sind und an dessen gegenüberliegender Oberfläche die Lochblenden 21 des Lochblendenarrays 22 liegen.

Fig. 9 skizziert den Einsatz eines dichroitischen Spiegels 50 zwischen den Mikrolinsenrädem 9 und 18 anstelle des Strahlteilerwürfels 16 bei dem Mikroskop gemäß Fig. 8. Um den resultierenden Strahlenversatz durch den dichroitischen Spiegel 50 für das durchtretende Probenlicht 15 zu kompensieren, ist orthogonal zu dem dichroitischen Spiegel 50 eine optische Platte 51 mit planparallelen Oberflächen und abgestimmter Dicke vorgesehen. Die optische Platte 51 führt den Strahlversatz durch den dichroitischen Spiegel 50 wieder auf Null zurück.

### BEZUGSZEICHENLISTE

- 1 -: Mikroskop
- 2 -: Probe
- 3 -: Messpunkt
- 4 -: Beleuchtungslicht
- 5 -: Lichtquelle
- 6 -: Laser
- 7 -: Strahlenbündel
- 8 -: Strahlteiler
- 9 -: Mikrolinsenrad
- 10 -: Mikrolinsenarray

- 11 -: Mikrolinse
- 12 -: Teilstrahlenbündel
- 13 -: Tubuslinse
- 14 -: Mikroskopobjektiv
- 15 -: Probenlicht
- 16 -: Strahlteilerwürfel
- 17 -: Teilstrahlenbündel
- 18 -: Mikrolinsenrad
- 19 -: Mikrolinsenarray
- 20 -: Mikrolinse

- 21 -: Lochblende
- 22 -: Lochblendenarray
- 23 -: Lochblendenrad
- 24 -: Linse
- 25 -: Strahlteiler
- 26 -: Linse
- 27 -: Detektor
- 28 -: Kamera

- 29 -: Okular
- 30 -: Auge

- 31 -: Drehachse
- 32 -: Verbindung
- 33 -: Verbindung
- 34 -: Spiegel
- 35 -: Teleskop
- 36 -: Farbfilter
- 37 -: Blende
- 38 -: dichroitischer Strahlteilerwürfel
- 39 -: Farbfilter
- 40 -: Körper

- 41 -: Pfeil
- 42 -: gestrichelte Linie
- 43 -: Linse
- 44 -: Linse
- 45 -: Polarisationsstrahlteiler
- 46 -: Lambdaviertelplatte
- 47 -: Strahlteiler würfel
- 48 -: Umlenkprisma
- 49 -: Teleskop
- 50 -: dichroitischer Spiegel

- 51 -: Platte
- 52 -: Lochblendenarray
- 53 -: Lochblende
- 54 -: Durchtrittsquerschnitt
- 55 -: Pfeil
- 56 -: Pfeil
- 57 -: Fokusbereich

## Patentansprüche

1. Konfokales Mikroskop (1) mit einem Mikrolinsenarray (10) zur Aufspaltung eines Strahlenbündels (7) aus Beleuchtungslicht (4) in eine Mehrzahl von konvergenten Teilstrahlenbündeln (12), um eine Probe (2) in mehreren Messpunkten (3) gleichzeitig zu beleuchten, mit einem Strahlteiler (8) zur Trennung der Strahlengänge des Beleuchtungslichts (4) und des von der Beleuchtung der Probe (2) stammenden, in Rückwärtsrichtung zu dem Beleuchtungslicht (4) aufgefangenen Probenlichts (15), mit einem dem Mikrolinsenarray (10) zur Aufspaltung des Beleuchtungslichts (4) entsprechenden Lochblendenarray (22) im Strahlengang des Probenlichts (15) und mit einem weiteren, dem Mikrolinsenarray (10) zu Aufspaltung des Beleuchtungslichts (4) entsprechenden Mikrolinsenarray (19) im Strahlengang des Probenlichts (15), wobei der Strahlteiler (8) zwischen den Mikrolinsenarrays (10, 19) angeordnet ist, **dadurch gekennzeichnet, dass** auch das Mikrolinsenarray (10) zur Aufspaltung des Beleuchtungslichts (4) in dem Strahlengang des Probenlichts angeordnet ist und dass das Lochblendenarray (22) auf einer dem Strahlteiler (8) abgewandten Seite eines der Mikrolinsenarrays (10,19) angeordnet ist

2. Mikroskop nach Anspruch 1, **dadurch gekennzeichnet, dass** das Strahlenbündel (7) des Beleuchtungslichts (4) ein paralleles Strahlenbündel (7) ist.

3. Mikroskop nach Anspruch 1 oder 2, **dadurch gekennzeichnet, dass** das alle Mikrolinsen (20) des weiteren Mikrolinsenarrays (19) gleiche Brennweiten aufweisen.

4. Mikroskop nach Anspruch 1, 2 oder 3, **dadurch gekennzeichnet, dass** die beiden Mikrolinsenarrays (10, 19) parallel zueinander ausgerichtet sind, wobei der Strahlteiler (8) das Strahlenbündel (7) des Beleuchtungslichts (4) auf den Strahlengang des Probenlichts (15) umlenkt.

5. Mikroskop nach einem der Ansprüche 1 bis 4, **dadurch gekennzeichnet, dass** das Lochblendenarray (22) von der Probe (2) aus gesehen vor dem Mikrolinsenarray (10) zur Aufspaltung des Beleuchtungslichts (4) angeordnet ist.

6. Mikroskop nach einem der Ansprüche 1 bis 4, **dadurch gekennzeichnet, dass** das Lochblendenarray (22) von der Probe aus gesehen hinter dem weiteren Mikrolinsenarray (19) angeordnet ist.

7. Mikroskop nach einem der Ansprüche 1 bis 6, **dadurch gekennzeichnet, dass** das Lochblendenarray (22) mit einem der Mikrolinsenarrays (10 oder 19) körperlich verbunden ist.

8. Mikroskop nach Anspruch 7, **dadurch gekennzeichnet, dass** das Mikrolinsenarray (10 oder 19) und das Lochblendenarray (22) an zwei einander gegenüberliegenden Oberflächen eines Körpers (40) aus lichtbrechendem Material ausgebildet sind.

9. Mikroskop nach einem der Ansprüche 1 bis 8, **dadurch gekennzeichnet, dass** eine Abrastereinrichtung vorgesehen ist, die die beiden Mikrolinsenarrays (10, 19) und das Lochblendenarray (22) synchron parallel zu ihren Haupterstreckungsebenen bewegt.

10. Mikroskop nach Anspruch 9, **dadurch gekennzeichnet, dass** die beiden Mikrolinsenarrays (10, 19) und das Lochblendenarray (22) als rotierende Räder (9, 18, 23) vorgesehen sind.

11. Mikroskop nach einem der Ansprüche 1 bis 10, **dadurch gekennzeichnet, dass** ein weiteres, dem ersten Lochblendenarray (22) entsprechendes Lochblendenarray (52) vorgesehen ist, das direkt vor oder hinter dem ersten Lochblendenarray (22) angeordnet ist und das parallel zu dem ersten Lochblendenarray (22) verschieblich ist, um die Größe der gemeinsamen freien Durchtrittsquerschnitte (54) zu variieren.

12. Mikroskop nach Anspruch 11, **dadurch gekennzeichnet, dass** die Lochblenden (21, 53) jedes Mikrolinsenarrays (22, 52) quadratisch sind und dass die Lochblenden (21, 53) aus einer vollen Überdeckung in Richtung einer Quadratdiagonalen relativ zueinander verschieblich sind.

13. Mikroskop nach einem der Ansprüche 1 bis 12, **dadurch gekennzeichnet, dass** der Strahlteiler (8) das Probenlicht (15) versatzfrei durchtreten lässt oder versatzkompensiert ist.

14. Mikroskop nach einem der Ansprüche 1 bis 13, das als Fluoreszenzlichtmikroskop ausgebildet ist.

15. Mikroskop nach einem der Ansprüche 1 bis 13, das als Reflektions- oder Streulichtmikroskop ausgebildet ist.

## Claims

1. A confocal microscope (1) comprising a micro-lens array (10) for splitting a ray bundle (7) of illumination light (4) into a plurality of convergent partial ray bundles (12) to illuminate a sample (2) simultaneously at several measuring points (3), a beam splitter (8) for separating the beam paths of the illumination light (4) and of the sample light (15) originating from the illumination of the sample (2) and captured in an inverse direction with regard to the illumination light (4), a pinhole diaphragm array (22) in the beam path of the sample light (15) which corresponds to the micro-lens array (10) for splitting the illumination light (4), and a further micro-lens array (19) in the beam path of the sample light (15) which corresponds to the micro-lens array (10) for splitting the illumination light (4), the beam splitter (8) being arranged between the micro-lens arrays (10, 19), **characterized in that** the micro-lens array (10) for splitting the illumination light (4) is also arranged in the beam path of the sample light, and that the pinhole diaphragm array (22) is arranged on one side of one of the microlens arrays (10, 19) facing away from the beam splitter (8).

2. The microscope according to of claim 1, **characterized in that** the ray bundle (7) of the illumination light (4) is a parallel ray bundle.

3. The microscope of claim 1 or 2, **characterized in that** all micro-lenses (20) of the further micro-lens array (19) have the same focus length.

4. The microscope of claim 1, 2 or 3, **characterized in that** the two micro-lens arrays (10, 19) are orientated in parallel to each other, the beam splitter (8) deviating the ray bundle (7) of the illumination light (4) onto the beam path of the sample light (15).

5. The microscope of any of the claims 4, **characterized in that** the pinhole diaphragm array (22) is arranged in front of said mico-lens array (10) splitting the illumination light (4) when viewed from the sample (2).

6. The microscope of claim 1 to 4, **characterized in that** the pinhole diaphragm array (22) is arranged behind the further micro-lens array (19) when viewed from the sample (2).

7. The microscope of any of the claims 1 to 6, **characterized in that** the pinhole diaphragm array (22) is physically connected to one of the micro-lens arrays (10 or 19).

8. The microscope of claim 7, **characterized in that** the microl-ens array (10 or 19) and the pinhole diaphragm array (22) are provided at two opposite surfaces of a body (40) of light refractive material.

9. The microscope of any of the claims 1 to 8, **characterized in that** a scanning device is provided which synchroneously moves the two micro-lens arrays (10, 19) and the pinhole diaphragm array (22) in parallel to their planes of main extension.

10. The microscope of claim 9, **characterized in that** the two micro-lens arrays (10, 19) and said pinhole diaphragm array (22) are provided as rotating wheels (9,18, 23).

11. The microscope of any of the claims 1 to 10, **characterized in that** a further pinhole diaphragm array (52) corresponding to the first pinhole diaphragm array (22) is provided which is arranged directly in front of or behind the first pinhole diaphragm array (22) and which is moveable in parallel to the first pinhole diaphragm array (22) to vary the size of common free passageway cross-sections (54).

12. The microscope of claim 11, **characterized in that** the pinhole diaphragms (21, 53) of each pinhole diaphragm array (22, 52) are square, and that the pinhole diaphragms (21, 53) are moveable with regard to each other in a direction of a square diagonal starting from a full coincidence.

13. The microscope of any of the claims 1 to 12, **characterized in that** the beam splitter (8) transmits the sample light (15) without offset or is compensated for offset.

14. The microscope of any of the claims 1 to 13 designed as a fluorescence light microscope.

15. The microscope of any of the claims 1 to 13 designed as a reflection or a scattered light microscope.

## Revendications

1. Microscope cofocal (1) comportant un ensemble de microlentilles (10) pour diviser un faisceau de rayons (7) d'une lumière d'éclairage (4) en une pluralité de faisceaux de rayons partiels (12) convergents, pour éclairer simultanément un échantillon (2) en plusieurs points de mesure (3), comportant un diviseur de rayons (8) pour la séparation des rayons de la lumière d'éclairage (4) et de la lumière d'échantillon (15) provenant de l'éclairage de l'échantillon (2) et reçue dans un sens inverse à la lumière d'éclairage (4), comportant un ensemble de diaphragmes perforés (22) correspondant à l'ensemble de microlentilles (10) pour la division de la lumière d'éclairage (4), dans la trajectoire des rayons de la lumière d'échantillon (15), et comportant un ensemble de microlentilles (19) supplémentaire, correspondant à l'ensemble de microlentilles (10) pour la division de la lumière d'éclairage (4), dans la trajectoire des rayons de la lumière d'échantillon (15), le diviseur de rayons (8) étant disposé entre les ensembles de microlentilles (10, 19), **caractérisé en ce que** l'ensemble de microlentilles (10) pour la division de la lumière d'éclairage (4) est disposé aussi dans la trajectoire des rayons de la lumière d'échantillon, et **en ce que** l'ensemble de diaphragmes perforés (22) est disposé sur un côté, tourné à l'opposé du diviseur de rayons (8), de l'un des ensembles de microlentilles (10, 19).

2. Microscope selon la revendication 1, **caractérisé en ce que** le faisceau de rayons (7) de la lumière d'éclairage (4) est un faisceau de rayons parallèles (7).

3. Microscope selon la revendication 1 ou 2, **caractérisé en ce que** toutes les microlentilles (20) de l'ensemble de microlentilles (19) supplémentaire présentent les mêmes distances focales.

4. Microscope selon les revendications 1, 2 ou 3, **caractérisé en ce que** les deux ensembles de microlentilles (10, 19) sont orientés parallèlement l'un à l'autre, le diviseur de rayons (8) déviant le faisceau de rayons (7) de la lumière d'éclairage (4) sur la trajectoire des rayons de la lumière d'échantillon (15).

5. Microscope selon l'une des revendications 1 à 4, **caractérisé en ce que** l'ensemble de diaphragmes perforés (22), vu depuis l'échantillon (2), est disposé devant l'ensemble de microlentilles (10) pour la division de la lumière d'éclairage (4).

6. Microscope selon l'une des revendications 1 à 4, **caractérisé en ce que** l'ensemble de diaphragmes perforés (22), vu depuis l'échantillon, est disposé derrière l'ensemble de microlentilles (19) supplémentaire.

7. Microscope selon l'une des revendications 1 à 6, **caractérisé en ce que** l'ensemble de diaphragmes perforés (22) est relié physiquement à l'un des ensembles de microlentilles (10 ou 19).

8. Microscope selon la revendication 7, **caractérisé en ce que** l'ensemble de microlentilles (10 ou 19) et l'ensemble de diaphragmes perforés (22) sont réalisés sur deux surfaces opposées l'une à l'autre d'un corps (40) en un matériau réfringent.

9. Microscope selon l'une des revendications 1 à 8, **caractérisé en ce qu'**il est prévu un dispositif de balayage qui déplace les deux ensembles de microlentilles (10, 19) et l'ensemble de diaphragmes perforés (22) de manière synchrone et parallèle à leurs plans d'étendue principale.

10. Microscope selon la revendication 9, **caractérisé en ce que** les deux ensembles de microlentilles (10, 19) et l'ensemble de diaphragmes perforés (22) sont prévus sous la forme de roues (9, 18, 23) rotatives.

11. Microscope selon l'une des revendications 1 à 10, **caractérisé en ce qu'**il est prévu un ensemble de diaphragmes perforés (52) supplémentaire, correspondant au premier ensemble de diaphragmes perforés (22), qui est disposé directement devant ou derrière le premier ensemble de diaphragmes perforés (22) et qui peut coulisser parallèlement au premier ensemble de diaphragmes perforés (22), pour modifier la dimension des sections de passage (54) libres communes.

12. Microscope selon la revendication 11, **caractérisé en ce que** les diaphragmes perforés (21, 53) de chaque ensemble de microlentilles (22, 52) sont carrés et **en ce que** les diaphragmes perforés (21, 53) sont déplaçables les uns par rapport aux autres depuis un recouvrement total, dans la direction d'une diagonale du carré.

13. Microscope selon l'une des revendications 1 à 12, **caractérisé en ce que** le diviseur de rayons (8) laisse passer sans décalage la lumière d'échantillon (15) ou compense le décalage.

14. Microscope selon l'une des revendications 1 à 13 qui est réalisé sous la forme d'un microscope à lumière fluorescente.

15. Microscope selon l'une des revendications 1 à 13 qui est réalisé sous la forme d'un microscope à réflexion ou à lumière diffusée.
